# EUROPEAN PATENT APPLICATION

(11) **EP 4 779 711 A1**
(43) Date of publication of application: **22.07.2026**
(21) Application number: 25788407.2
(22) Date of filing: 28.02.2025
(51) Int. Cl.: H01M 4/36

(54) **COMPOSITE ELECTRODE ACTIVE LAYER, ELECTRODE SHEET AND SECONDARY BATTERY**

(30) Priority: 22.11.2024 CN 202411692060
(71) Applicant: Eve Power Co., Ltd., Jingmen, Hubei 448000 (CN)
(72) Inventor: LIU, Fanfen, Hubei 448000 (CN); JIN, Lun, Hubei 448000 (CN); FU, Hang, Hubei 448000 (CN); ZHANG, Heng, Hubei 448000 (CN); ZENG, Hongchun, Hubei 448000 (CN); LIU, Qingsong, Hubei 448000 (CN)
(74) Representative: Zhu, Puxing
(86) International application number: PCT/CN2025/079973
(87) International publication number: WO 2026/108011

(57) **Abstract**

A composite electrode active layer, an electrode sheet and a secondary battery are provided. The composite electrode active layer includes an active material layer and a composite insulating layer stacked in sequence. The composite insulating layer includes inorganic particles, a heat-resistant polymer and a heat-sensitive polymer. A weight ratio of the inorganic particles, the heat-resistant polymer and the heat-sensitive polymer is (50~100): (1~10): (5~50). A melting temperature of the heat-resistant polymer is 180°C to 450°C; and a softening temperature of the heat-sensitive polymer is 80°C to 120°C.

## Description

The present application claims priority to Chinese Patent Application No. 2024116920604, filed on November 22, 2025. The entire content of the aforementioned application is incorporated herein by reference.

### TECHNICAL FILED

The present application relates to the field of secondary batteries, and in particular, to a composite electrode active layer, an electrode sheet and a secondary battery.

### BACKGROUND

In order to meet the growing demand for batteries, high-capacity and high-energy density secondary batteries have also received more and more attention. Lithium-ion batteries and sodium-ion batteries, as mainstream products of secondary batteries, are widely used in many fields such as new energy vehicles, wearable devices, and portable power supplies, and the like. As one of the commonly used components of secondary batteries at this stage, the separator mainly plays the role of ion transmission and electronic isolation. The pore closing temperature and rupture temperature of the separator are key technical indicators for characterizing the safety of the separator and even the safety of the battery cell. Currently, the mass-produced separator substrates are made of PE and PP materials. The pore closing temperature of the PE separator is ~130°C, and the pore closing temperature of the PP separator is ~150°C, which makes it impossible to achieve timely pore closing and blocking the transmission of conductive ions when the separator is in thermal abuse. At the same time, the rupture temperature of the PE is ~145°C and the rupture temperature of the PP is ~170°C, which further leads to the separator to rupture when the battery cell is in thermal abuse, the positive electrode sheet and negative electrode sheet are shortcircuited, and safety accidents such as smoke and explosion occur. Therefore, the separators in the related art cannot be truly compatible with low pore closing temperatures and high rupture temperatures.

In the safety design of secondary batteries, short circuit problems inside the electrodes are particularly important. A short circuit inside the battery will cause the internal temperature to rise rapidly, and in severe cases, it will cause thermal runaway of the battery. Therefore, how to effectively prevent the short circuit inside the electrodes is one of the key problems that need to be solved when designing secondary batteries.

At present, the methods of preventing short circuits inside the electrodes are mainly divided into two major categories: one is achieved by adding inorganic particles with thermal expansion and contraction properties to the active material layer. For example, Chinese patent CN103381436A discloses a composite electrode active material with thermal expansion and contraction properties. The active material uses the positive electrode active material as the base material, and inorganic particles with thermal expansion and contraction properties are added to the positive electrode active material, and the amount of the inorganic particles is 1 to 10% of the positive electrode active material. The inorganic particles are inorganic powders with thermal expansion and contraction properties. In the above patented technology, the amount of inorganic powder added is small, and the inorganic powder and the active material are not fully mixed, the inorganic powder is prone to form voids in the electrode material, thereby increasing the capacity loss of the active material, and at the same time it has a negative impact on the physical properties and electrochemical properties of the electrode material. Another type is achieved by providing insulating layers on both sides of the active material layer. For example, Chinese patent CN101937953A discloses a positive electrode layer of a lithium ion battery, which includes a positive electrode active material layer, an adhesive layer disposed on both sides of the positive electrode active material layer, and an insulating layer disposed on the side of the positive electrode active material layer away from the adhesive layer; the insulating layer is an insulating layer with a thermal expansion coefficient of less than 4× 10⁻⁵/°C. In order to ensure that the thermal expansion coefficient of the insulating layer is less than 4×10⁻⁵/°C in the above patented technology, the material of the insulating layer is ceramic material. The price of the ceramic material is relatively high, and the processing technology of the ceramic material is complex and the production cost is high.

Based on this, how to provide a composite electrode active layer with both the low pore closing temperature and the high rupture temperature to enable it to improve the safety and stability of the corresponding secondary battery at high temperature while playing an ion transmission and electron isolation role is one of the important technical problems that need to be solved in this field.

### Technical Problem

The secondary battery separators in the related art are difficult to have both the low pore closing temperature and high rupture temperature, which leads to poor safety and stability of secondary batteries at high temperatures.

### Technical Solutions

In the first aspect, the embodiments of the present application provide a composite electrode active layer, the composite electrode active layer includes an active material layer and a composite insulating layer stacked in sequence, and the composite insulating layer includes inorganic particles, a heat-resistant polymer and a heat-sensitive polymer; a weight ratio of the inorganic particles, the heat-resistant polymer and the heat-sensitive polymer is (50~100): (1~10): (5~50); a melting temperature of the heat-resistant polymer is 180°C to 450°C; and a softening temperature of the heat-sensitive polymer is 80°C to 120°C.

In the second aspect, the embodiments of the present application provide an electrode sheet, including a current collector and an electrode active layer disposed on a surface of at least one side of the current collector, the electrode active layer is the composite electrode active layer described above, and the active material layer in the composite electrode active layer is disposed to be in contact with the current collector; and the electrode sheet is a negative electrode sheet and/or a positive electrode sheet.

In the third aspect, the embodiments of the present application provide a secondary battery, including a positive electrode sheet, a negative electrode sheet and an electrolyte, the positive electrode sheet is the positive electrode sheet described above; and/or, the negative electrode sheet is the negative electrode sheet described above.

Advantageous effects of the present application:
1. The present application designs the composite electrode active layer to achieve a low pore closing temperature and a high rupture temperature, thereby obtaining a composite electrode active layer with a porous structure and high temperature resistance. Specifically, a porous composite insulating coating is provided on the surface of the active material layer. Compared with a traditional separator, effective transmission of conductive ions can be achieved while isolating the direct contact between the positive electrode main material and negative electrode main material. The composite insulating layer provided in the present application uses a heat-resistant polymer, which is used as a high melting point adhesive, thereby obtaining high temperature resistance characteristics, and solving the problem of separator rupture and thermal runaway of the traditional separator caused by high temperature. The addition of inorganic particles improves the mechanical strength and electrochemical stability of the composite insulating layer, further optimizing the overall performance of the battery. Meanwhile, the above-mentioned composite insulating layer provided by the present application also includes a heat-sensitive polymer, and its melting temperature significantly optimizes the pore closing temperature of the resulting composite insulating layer. That is, when applied to secondary batteries, the above-mentioned heat-sensitive polymer with a softening temperature of 80°C to 120°C can be melted in this temperature range, block the porous structure in the coating, hinder the transmission of conductive ions at high temperatures, allow its high temperature internal resistance to increase rapidly, and prevent the occurrence of thermal runaway of the battery. In particular, in addition to the functional gain brought by the above three components, the amount coordination relationship of the three components is indispensable. On this basis, the present application strictly controls the amount ratio of the three components within the above range, so that the inorganic particles, the heat-resistant polymer and the heat-sensitive polymer can better cooperate, thereby significantly optimizing the porous structure of the obtained composite insulating layer, while ensuring that it can have a low pore closing temperature and a high rupture temperature, and finally obtain a high-temperature-resistant composite electrode active layer.
2. The negative electrode sheet and/or positive electrode sheet including the above-mentioned composite electrode active layer obtained in the present application have superior high temperature resistance characteristics, thereby showing higher safety and stability at high temperatures.
3. When the above-mentioned composite electrode active layer obtained in the present application is combined with the current collector to obtain an electrode sheet and applied to a secondary battery, it effectively solves the problem of thermal runaway in the secondary battery rupture caused by high temperatures in the traditional separator. At the same time, it also prevents the occurrence of thermal runaway, which significantly improves the high temperature safety of the corresponding secondary battery.

### DETAILED DESCRIPTION

The first aspect of the present application provides a composite electrode active layer, the composite electrode active layer includes an active material layer and a composite insulating layer stacked in sequence, and the composite insulating layer includes inorganic particles, a heat-resistant polymer and a heat-sensitive polymer; a weight ratio of the inorganic particles, the heat-resistant polymer and the heat-sensitive polymer is (50~100): (1~10): (5~50); a melting temperature of the heat-resistant polymer is 180°C to 450°C; and a softening temperature of the heat-sensitive polymer is 80°C to 120°C.

In some embodiments of the present application, the weight ratio of the inorganic particles, the heat-resistant polymer and the heat-sensitive polymer is (65~85): (3~5): (10~30). Based on the above contents, the amount ratio after further optimization can not only improve the stability and mechanical strength of the composite insulating layer under normal working conditions, but also respond more quickly when the battery is overheated, effectively preventing the transmission of conductive ions, and further improving the safety and reliability of the battery.

For the heat-resistant polymer in the present application, it is preferred to be selected from one or more of polyacrylates, polyimides or amide polymers, and more preferred to be selected from one or more of poly(m-phenylene isophthtalamide), poly(ethylene terephthalate) or polybismaleimide. The above-mentioned heat-resistant polymers have better heat-resistance and chemical stability, and can more effectively improve the thermal stability and electrochemical stability of the composite insulating layer.

In order to obtain a composite insulating layer with stronger mechanical properties based on high melting temperature, it is more preferred that the heat-resistant polymer is poly(m-phenylene isophthtalamide) and poly(ethylene terephthalate), and the weight ratio of poly(m-phenylene isophthtalamide) to poly(ethylene terephthalate) is 1: (0.8~1.2). After a lot of experiments, the inventors have found that this combination can make full use of the complementary characteristics of the two heat-resistant polymers, thereby providing higher heat resistance and mechanical strength for the resulting composite insulating layer, and more significantly optimizing the high temperature safety of the corresponding secondary batteries.

For the heat-sensitive polymer in the present application, it is preferred to be selected from one or more of polyol-based polymers or polyvinyl alcohols, and more preferred to be polyethylene glycol and/or polyacrylic acid. Compared with other polymers in the art whose softening temperatures are also in the temperature range of 80°C to 120, the above-mentioned heat-sensitive polymers have better thermal sensitivity properties, and can respond more quickly when the battery in which they are located is overheated, prevent the transmission of conductive ions therein, play a more effective self-safety role, and ultimately reduce the possibility of short circuits inside the battery more significantly.

Further, the inventors have preferred that the heat-sensitive polymer is polyethylene glycol and polyvinyl alcohol after a large number of experiments, and the weight ratio of polyethylene glycol to polyvinyl alcohol is 1: (1.8~2.0), so as to further balance and improve its chemical stability while providing superior thermal sensitivity to the resulting composite insulating layer, and ultimately enable the corresponding secondary battery to exhibit better high temperature safety.

Also, in order to more significantly optimize the porous structure of the resulting composite insulating layer, so as to obtain electrode sheets with higher mechanical strength and more stability, it is preferred that the D50 of the inorganic particles is 0.1 µm to 6.0 µm, and (D90-D10)/D50 is 0.5 to 3.0.

In some embodiments of the present application, the inorganic particles are selected from one or more of boehmite (which has a molecular formula of Al(OH)₃), Al₂O₃, BaTiO₃, SnO₂, CeO₂, MgO, NiO, CaO, ZnO, ZrO₂, SiO₂, Y₂O₃, SiC or TiO₂. The above-mentioned inorganic particles can not only improve the mechanical strength and electrochemical stability of the composite insulating layer, but also make the thermal stability of the resulting composite insulating layer and the corresponding secondary battery to be higher. After a lot of experiments, the inventor further preferred that the inorganic particles are BaTiO₃ and TiO₂, and the weight ratio of BaTiO₃ to TiO₂ is (0.1~10): 1, and more preferably (0.4~0.5): 1. The combination of BaTiO₃ and TiO₂ according to the above-mentioned amount ratio can provide excellent electrochemical performance and thermal stability. Moreover, when the secondary battery in which BaTiO₃ and TiO₂ are located is overheated, they can absorb heat more effectively, further improving the safety of the battery. In addition, BaTiO₃ has a positive temperature coefficient effect, and its resistance value increases with the increase of temperature, so that the battery cell can further increase the internal resistance of the battery under high temperature state and prevent thermal runaway. At the same time, they also have good chemical stability, and are not easy to decompose and collapse at high temperatures to ensure the stability of the structure of the insulating layer; the two can be combined to achieve synergistic effects.

Furthermore, in order to better exert the gain effect of the composite insulating layer on the heat resistance of the composite electrode active layer, and to obtain an electrode sheet with better high temperature stability, it is preferred that the thickness of the composite insulating layer is 4 µm to 20 µm. It is preferred that the thickness ratio of the composite insulating layer to the active material layer is (0.01~0.5): 1, which can better balance thermal stability and electrochemical properties, so that the electrode sheet where it is located has a higher energy density while maintaining good thermal stability.

Preferably, the active material layer is a positive electrode material active layer and/or a negative electrode material active layer; more preferably, the positive electrode material is selected from one or more of iron phosphate salts, ferric manganese phosphate salts, or nickel-cobalt manganese ternary materials. Specifically, when the secondary battery is a lithium-ion battery, the positive electrode material may be LFP, LMFP and NCM. And/or, the negative electrode material is selected from one or more of graphite, silicon, or silicon-carbon composite materials.

In some embodiments of the present application, the inorganic particles are BaTiO₃ and TiO₂, and the weight ratio of the BaTiO₃ to TiO₂ is (0.4 to 0.5): 1; and/or, the heat-resistant polymer is poly(m-phenylene isophthtalamide) and poly(ethylene terephthalate), and the weight ratio of poly(m-phenylene isophthtalamide) to poly(ethylene terephthalate) is 1: (0.8 to 1.2); and/or, the heat-sensitive polymer is polyethylene glycol and polyvinyl alcohol, and the weight ratio of the polyethylene glycol to polyvinyl alcohol is 1: (1.8 to 2.0). The inventors have made the component amount of the composite insulating layer preferable after extensive experiments to obtain the above specific solution. When the composite insulating layer formed by the above-mentioned solution forms a composite electrode active layer with the active material layer and is applied to the secondary battery, the resulting secondary battery can exhibit higher high temperature safety.

A second aspect of the present application provides an electrode sheet, including a current collector and an electrode active layer disposed on a surface of at least one side of the current collector, the electrode active layer is the above-mentioned composite electrode active layer, and the active material layer in the composite electrode active layer is disposed to be in contact with the current collector. Preferably, the composite insulating layer is disposed on a surface of a side of the active material layer away from the current collector by a coating process, and the coating surface density of the composite insulating layer during coating is 15 g/m²~45 g/m²; the electrode sheet is a negative electrode sheet and/or a positive electrode sheet. The negative electrode sheet and/or positive electrode sheet obtained in the present application and including the above-mentioned composite electrode active layer have superior high temperature resistance characteristics, thereby showing higher safety and stability at high temperatures. In particular, during the preparation of the electrode sheet, the composite insulating layer is coated and formed in a manner with a coating surface density of 15 g/m² to 45 g/m², which can form a closer bond with the active material layer, thereby significantly improving the high-temperature thermal stability and structural stability of the resulting negative electrode sheet and/or positive electrode sheet.

For the formation of the positive electrode material active layer and/or the negative electrode material active layer, in order to better cooperate with the subsequently coated composite insulating layer during the preparation process, to form an electrode sheet with higher electrochemical properties, high temperature resistance and structural stability, in some embodiments of the present application: the electrode sheet is a positive electrode sheet, the current collector is a positive electrode current collector, the active material layer is a positive electrode material active layer, and the positive electrode material active layer is disposed on the positive electrode current collector by a coating process, and the coating surface density of the active layer of the positive electrode material during coating is 100 g/m²~400 g/m²; and/or, the electrode sheet is a negative electrode sheet, the current collector is a negative electrode current collector, and the active material layer is a negative electrode material active layer, and the negative electrode material active layer is disposed on the negative electrode current collector by the coating process, and the coating surface density of the active layer of the negative electrode material during coating is 40 g/m²~200 g/m².

Specifically, in actual production applications, the coating process can be selected from gravure coating, transfer coating, extrusion coating, and scraper coating. Meanwhile, in the coating process, one or more of DI water (Deionized Water), N-methyl-2-pyrrolidone (NMP) or dimethylformamide (DMF) can be used as dispersants for the mixed slurry used for coating.

A third aspect of the present application provides a secondary battery, including a positive electrode sheet, a negative electrode sheet and an electrolyte, the positive electrode sheet is the above-mentioned positive electrode sheet; and/or the negative electrode sheet is the above-mentioned negative electrode sheet. When the above-mentioned composite electrode active layer obtained in the present application is combined with the current collector to obtain an electrode sheet and applied to a secondary battery, it effectively solves the problem of thermal runaway in the rupture of the traditional separator of the secondary battery due to high temperature. At the same time, it also prevents the occurrence of thermal runaway, and significantly improves the high temperature safety of the corresponding secondary battery.

### Example 1

A method for preparing a composite electrode active layer.
(1) Boehmite was selected as the inorganic particles, poly(m-phenylene isophthtalamide) was selected as the heat-resistant polymer, polyethylene glycol (PEG) was selected as the heat-sensitive polymer. The ingredients were prepared according to the weight ratio of the inorganic particles: the heat-resistant polymer: the heat-sensitive polymer of 65:5:30, NMP was used as the dispersant, and a mixed slurry of the composite insulating layer was obtained.
   The D50 of boehmite was 0.1 µm, (D90-D10)/D50 was 3; the melting temperature of the heat-resistant polymer poly(m-phenylene isophthtalamide) was 270°C; and the softening temperature of the heat-sensitive polymer PEG was 85°C.
(2) LFP was used as the positive electrode active material, PVDF was used as the binder, and conductive carbon black and carbon nanotubes (CNT) were used as the conductive agent. The ingredients were prepared according to the weight ratio of the positive electrode active material: conductive carbon black: CNT: PVDF of 95:0.5:0.5:2.0, NMP was used as the dispersant, and a mixed slurry of the positive electrode was obtained.
(3) Graphite was used as the negative electrode active material, SBR was used as the binder, CMC was used as the thickener, and conductive carbon black was used as the conductive agent. The ingredients were prepared according to the weight ratio of the negative electrode active material: conductive carbon black: SBR: CMC of 96:1:2:1, deionized water was used as the dispersant, and a mixed slurry of the negative electrode was obtained.
(4) An aluminum foil was used as the positive electrode current collector, the obtained mixed slurry of the positive electrode was coated on both sides of the positive electrode current collector at a coating surface density of 100 g/m², and a positive electrode material active layer with a thickness of 55 µm was formed on both sides of the positive electrode current collector after rolling. A copper foil was used as the negative electrode current collector, the obtained mixed slurry of the negative electrode is coated on both sides of the negative electrode current collector at a coating surface density of 40 g/m², and a negative electrode material active layer with a thickness of 30 µm was formed on both sides of the negative electrode current collector after rolling.
(5) The obtained mixed slurry of the composite insulating layer was coated on two positive electrode material active layers and two negative electrode material active layers at a coating surface density of 15 g/m², and composite electrode active layers were formed, and the thickness of the composite insulating layer was 4 µm.

The ratio of the thickness of the formed composite insulating layer to the thickness of the negative electrode material active layer is 0.133:1, and ratio of the thickness of the formed composite insulating layer to the thickness of the positive electrode material active layer is 0.08:1.

### Example 2

A method for preparing a composite electrode active layer.
(1) Al₂O₃ was selected as the inorganic particles, poly(ethylene terephthalate) was selected as the heat-resistant polymer, polyvinyl alcohol was selected as the heat-sensitive polymer, the ingredients were prepared according to the weight ratio of inorganic particles: heat-resistant polymer: heat-sensitive polymer of 85:5:10, DI water was used as the dispersant, and a composite insulating layer mixed slurry was obtained.
   D50 of Al₂O₃ was 6µm, (D90-D10)/D50 was 0.5; the melting temperature of the heat-resistant polymer polyethylene terephthalate was 260°C; the softening temperature of the heat-sensitive polymer polyvinyl alcohol was 96°C.
(2) Referring to the conditions in Example 1, a positive electrode mixed slurry was obtained.
(3) Referring to the conditions in Example 1, a negative electrode mixed slurry was obtained.
(4) An aluminum foil was used as the positive electrode current collector, the obtained positive electrode mixed slurry was coated on both sides of the positive electrode current collector at the coating surface density of 400 g/m², and a positive electrode material active layer with a thickness of 210 µm was formed on both sides of the positive electrode current collector after rolling; a copper foil was used as the negative electrode current collector, the obtained negative electrode mixed slurry was coated on both sides of the negative electrode current collector at the coating surface density of 200 g/m², and a negative electrode material active layer with a thickness of 130 µm was formed on both sides of the negative electrode current collector after rolling.
(5) The obtained composite insulating layer mixed slurry was coated on two positive electrode material active layers and two negative electrode material active layers at the coating surface density of 45 g/m², and composite electrode active layers were formed, and the thickness of the composite insulating layer was 20 µm.

The ratio of the thickness of the formed composite insulating layer to the thickness of the negative electrode material active layer was 0.15:1, and the ratio of the thickness of the formed composite insulating layer to the thickness of the positive electrode material active layer was 0.10:1.

### Example 3

A method for preparing a composite electrode active layer.
(1) Both BaTiO₃ and TiO₂ (BaTiO₃:TiO₂=0.5:1, weight ratio) was selected as inorganic particles, a mixture of poly(m-phenylene isophthtalamide) and poly(ethylene terephthalate) was selected as the heat-resistant polymer (poly(m-phenylene isophthtalamide) and poly(ethylene terephthalate)=1:1, weight ratio), and a mixture of polyvinyl alcohol and PEG was selected as the heat-sensitive polymer (PEG: polyvinyl alcohol=1:2, weight ratio). The ingredients were prepared according to weight ratio of inorganic particles: heat-resistant polymer: heat-sensitive polymer of 75:3:22, DMF was used as a dispersant, and a composite insulating layer mixed slurry was obtained.
   D50 of BaTiO₃ was 3 µm, (D90-D10)/D50 was 1.5; the D50 of TiO₂ was 1.2 µm, and (D90-D10)/D50 was 2.7; the melting temperature of the mixture formed by poly(m-phenylene isophthtalamide) and poly(ethylene terephthalate) was 264°C; the softening temperature of the mixture formed by polyvinyl alcohol and PEG was 89°C.
(2) Referring to the conditions in Example 1, a positive electrode mixed slurry was obtained.
(3) Referring to the conditions in Example 1, a negative electrode mixed slurry was obtained.
(4) An aluminum foil was used as the positive electrode current collector, the obtained positive electrode mixed slurry was coated on both sides of the positive electrode current collector at the coating surface density of 250 g/m², and a positive electrode material active layer with a thickness of 132 µm was formed on both sides of the positive electrode current collector after rolling; a copper foil was used as the negative electrode current collector, the obtained negative electrode mixed slurry was coated on both sides of the negative electrode current collector at the coating surface density of 120 g/m², and a negative electrode material active layer with a thickness of 78 µm was formed on both sides of the negative electrode current collector after rolling.
(5) The obtained composite insulating layer mixed slurry was coated on two positive electrode material active layers and two negative electrode material active layers at the coating surface density of 30 g/m², composite electrode active layers were formed, and the thickness of the composite insulating layer was 12 µm.

The ratio of the thickness of the composite insulating layer to the thickness of the negative electrode material active layer was 0.15:1, and the ratio of the thickness of the composite insulating layer to the thickness of the positive electrode material active layer was 0.09:1.

### Example 4

A method for preparing a composite electrode active layer.

The only difference between this Example and Example 1 was that the weight ratio of the inorganic particles: heat-resistant polymer: heat-sensitive polymer in step (1) was changed to 50:1:50.

### Example 5

A method for preparing a composite electrode active layer.

The only difference between this Example and Example 1 was that the weight ratio of the inorganic particles: heat-resistant polymer: heat-sensitive polymer in step (1) was changed to 100:10:5.

### Example 6

A method for preparing a composite electrode active layer.

The only difference between this Example and Example 1 was that the particle size distribution of boehmite used was changed, so that its D50 was 0.05 µm and (D90-D10)/D50 was 4.0.

### Example 7

A method for preparing a composite electrode active layer.

The only difference between this Example and Example 2 was that the particle size distribution of Al₂O₃ used was changed, so that its D50 was 8.0 µm and (D90-D10)/D50 was 0.3.

### Example 8

A method for preparing a composite electrode active layer.

The only difference between this Example and Example 3 was that the amount ratio of BaTiO₃ to TiO₂ used was changed to BaTiO₃: TiO₂=0.1.

### Example 9

A method for preparing a composite electrode active layer.

The only difference between this Example and Example 3 was that the amount ratio of BaTiO₃ to TiO₂ used was changed to BaTiO₃: TiO₂=10.

### Example 10

A method for preparing a composite electrode active layer.

The only difference between this Example and Example 3 was that the weight ratio of the heat-resistant polymer poly(m-phenylene isophthtalamide) to poly(ethylene terephthalate) used was changed to 1:0.5.

### Example 11

A method for preparing a composite electrode active layer.

The only difference between this Example and Example 3 was that the weight ratio of the heat-resistant polymer poly(m-phenylene isophthtalamide) to poly(ethylene terephthalate) used was changed to 1:2.

### Example 12

A method for preparing a composite electrode active layer.

The only difference between this Example and Example 3 was that the weight ratio of the heat-sensitive polymer PEG to polyvinyl alcohol used was 1:1.

### Example 13

A method for preparing a composite electrode active layer.

The only difference between this Example and Example 3 was that the weight ratio of the heat-sensitive polymer PEG to polyvinyl alcohol used was 1:3.

### Example 14

A method for preparing a composite electrode active layer.

The difference between this Example and Example 3 was only in the step (4) and step (5), specifically:

(4) An aluminum foil was used as the positive electrode current collector, the obtained positive electrode mixed slurry was coated on both sides of the positive electrode current collector at a coating surface density of 80 g/m², and a positive electrode material active layer with a thickness of 350 µm was formed on both sides of the negative electrode current collector. A copper foil was used as the negative electrode current collector, the obtained negative electrode mixed slurry was coated on both sides of the negative electrode current collector at a coating surface density of 30 g/m², and a negative electrode material active layer with a thickness of 50 µm was formed on both sides.

(5) The obtained composite insulating layer mixed slurry was coated on two positive electrode material active layers and two negative electrode material active layers at the coating surface density of 10 g/m², composite electrode active layers were formed, and the thickness of the composite insulating layer was 30 µm.

The ratio of the thickness of the formed composite insulating layer to the thickness of the negative electrode material active layer was 0.6:1, and the ratio of the thickness of the formed composite insulating layer to the thickness of the positive electrode material active layer was 0.009:1.

### Example 15

A method for preparing a composite electrode active layer.

The difference between this Example and Example 3 was only in the the step (4) and step (5), specifically:

(4) An aluminum foil was used as the positive electrode current collector, the obtained positive electrode mixed slurry was coated on both sides of the positive electrode current collector at a coating surface density of 500 g/m², and a positive electrode material active layer with a thickness of 350 µm was formed on both sides of the negative electrode current collector. A copper foil was used as the negative electrode current collector, the obtained negative electrode mixed slurry was coated on both sides of the negative electrode current collector at a coating surface density of 300 g/m², and a negative electrode material active layer with a thickness of 5 µm was formed on both sides.

(5) The obtained composite insulating layer mixed slurry was coated on two positive electrode material active layers and two negative electrode material active layers at the coating surface density of 60 g/m², and composite electrode active layers were formed, and the thickness of the composite insulating layer was 3 µm.

The ratio of the thickness of the formed composite insulating layer to the thickness of the negative electrode material active layer was 0.6:1, and the ratio of the thickness of the formed composite insulating layer to the thickness of the positive electrode material active layer was 0.009:1.

### Comparative Example 1

The only difference between this Comparative Example and Example 1 was that the composite insulating layer was not prepared. At the same time, when preparing the battery cell sample, the 9+2+2 model of EJ was used as the separator.

### Comparative Example 2

The only difference between this Comparative Example and Example 2 was that the composite insulating layer was not prepared. At the same time, when preparing the battery cell sample, the 7+3+3 model of EJ was used as the separator.

### Comparative Example 3

The only difference between this Comparative Example and Example 3 was that the composite insulating layer was not prepared. At the same time, when preparing the battery cell sample, the 12+2 model of EJ was used as the separator.

### Comparative Example 4

A method for preparing a composite electrode active layer.

The only difference between this Comparative Example and Example 3 was that the composite insulating layer did not contain a heat-sensitive polymer, and the weight ratio of the inorganic particles to the heat-resistant polymer was changed to 75:25.

### Comparative Example 5

A method for preparing a composite electrode active layer.

The only difference between this Comparative Example and Example 3 was that the composite insulating layer did not contain a heat-resistant polymer, and the weight ratio of the inorganic particles to the heat-sensitive polymer was changed to 75:25.

### Test method

Preparation of battery samples: The positive electrode sheets and negative electrode sheets obtained in each Example and Comparative Example were stacked in order, then a jelly roll was obtained by stacking the sheet. The jelly roll was placed in a soft packaging shell. After drying, D73 electrolyte was injected at the liquid injection amount of 4.0 g/Ah. After vacuum packaging, standing, formation, and capacity fading, a lithium-ion battery sample with a capacity of 1.5Ah was obtained. For the comparative example where the composite insulating layer had not been formed, the resulting negative electrode sheet, separator and positive electrode sheet were stacked to obtain a jelly roll, and then a battery sample with the same capacity was obtained by the same method as above.

Performance test of battery samples:
(1) Discharge capacity retention rate (60°C, 7d): Under a constant temperature environment of 25°C, the obtained secondary battery sample was left to stand for 24 hours after formation, and was charged to 3.65V at 0.33C constant current and constant voltage, and the cut-off current was 0.05C; then the battery sample was discharged to 2.5V at 0.33C constant current, and the discharge capacity C1 was recorded; then the battery sample was charged to 3.65V at 0.33C constant current and constant voltage, and the cut-off current was 0.05C. The battery sample was left to stand at 60°C for 7 days, then was discharged to 2.5V at 0.33C constant current and constant voltage, the discharge capacity C2 was recorded, and the discharge capacity retention rate R=C2/C 1 × 100%.
(2) IMP internal resistance: Impedance, i.e., internal resistance. After the above resulting battery samples were left to stand in an environment of 25°C for 24 hours after formation and capacity fading, and then IMP1, i.e., the internal resistance at the room temperature, was tested by the HIOKI voltage internal resistance meter. At the same time, the resulting battery samples were placed in a constant temperature oven at 120°C for 30 minutes, and then left to stand at 25°C for 30 minutes, and IMP2, i.e., the internal resistance after high temperature storage, was tested by the HIOKI voltage internal resistance meter.
(3) Safety test: the safety performance of the battery was verified by using a hot box test. In the test, the thermocouple was attached to the surface of the battery, and the battery was placed in a hot box. The battery was heated to 180°C at a heating rate of 5±1°C/min from a starting temperature (25°C) and stored for 30 minutes. The temperature of the hot box was required to be 180°C, and then was constant at this temperature. The change of the battery temperature over time and the change of voltage over time are recorded, and the time t and temperature T, at which the voltage drop occurs when the battery was kept at the constant temperature in the 180°C hot box, were determined.

The above test results are shown in Table 1.

**Table 1**

| | Discharge capacity retention rate R/% | IMP internal resistance | | Safety | |
|---|---|---|---|---|---|
| | | IMP1/mΩ | IMP2/mQ | Time at which the voltage drops t/min | Temperature at which the voltage drops /°C |
| Example 1 | 97.14 | 8.117 | 18.085 | > 100 | No abnormal voltage |
| Example 2 | 97.46 | 8.014 | 18.147 | > 100 | No abnormal voltage |
| Example 3 | 98.93 | 7.985 | 17.463 | > 100 | No abnormal voltage |
| Example 4 | 95.25 | 8.971 | 21.461 | > 100 | No abnormal voltage |
| Example 5 | 95.19 | 8.982 | 19.145 | > 100 | No abnormal voltage |
| Example 6 | 95.24 | 8.917 | 19.548 | > 100 | No abnormal voltage |
| Example 7 | 95.28 | 8.994 | 20.282 | > 100 | No abnormal voltage |
| Example 8 | 95.17 | 9.075 | 20.247 | > 100 | No abnormal voltage |
| Example 9 | 95.30 | 9.071 | 20.106 | > 100 | No abnormal voltage |
| Example 10 | 95.07 | 8.976 | 19.982 | > 100 | No abnormal voltage |
| Example 11 | 95.22 | 8.848 | 20.009 | > 100 | No abnormal voltage |
| Example 12 | 95.14 | 9.047 | 20.432 | > 100 | No abnormal voltage |
| Example 13 | 95.09 | 8.990 | 20.142 | > 100 | No abnormal voltage |
| Example 14 | 95.28 | 8.706 | 19.482 | > 100 | No abnormal voltage |
| Example 15 | 94.95 | 9.170 | 22.485 | > 100 | No abnormal voltage |
| Comparative Example 1 | 94.86 | 8.894 | 8.906 | 36 | 150 |
| Comparative Example 2 | 94.92 | 9.240 | 9.287 | 39 | 155 |
| Comparative Example 3 | 94.79 | 9.015 | 9.114 | 37 | 152 |
| Comparative Example 4 | 93.12 | 8.982 | 9.056 | > 100 | No abnormal voltage |
| Comparative Example 5 | 95.01 | 9.045 | 15.080 | 43 | 179 |

From the above description, it can be seen that the above-mentioned Examples of the present application achieve the preparation of a composite electrode active layer with high temperature resistance and excellent electrical properties, and solve the problem of thermal runaway of separator rupture caused by high temperature in the field of secondary batteries.

Specifically, compared with Examples 1 to 3 and Comparative Examples 1 to 3, the IMP internal resistance in Examples 1 to 3 was greatly improved after hot storage, indicating that the ion conduction in the liquid phase was blocked, which had a good heat sensitive effect, hindered the rapid continued discharge of the battery cell under the condition of thermal runaway at 120°C, and had good safety performance. Further, in the 180°C thermal shock test, the voltage did not drop suddenly, indicating that there was no short circuit inside the battery cell, and the safety performance was high. Compared with Comparative Example 4, Examples 1 to 3 showed that without the addition of the heat-sensitive polymer, thermal runaway of the battery cell occurred at 120°C, the internal resistance did not change, and the battery cell would continue to discharge, and the introduction of the heat-sensitive polymer could improve the risk of this working condition. Compared with Comparative Example 5, Examples 1 to 3 showed that when there was no heat-resistant polymer as an adhesive, the heat-sensitive polymer melts, and there was still a short circuit between the positive sheet and negative sheet.

## Claims

1. A composite electrode active layer, wherein the composite electrode active layer comprises an active material layer and a composite insulating layer stacked in sequence, and the composite insulating layer comprises inorganic particles, a heat-resistant polymer and a heat-sensitive polymer;
a weight ratio of the inorganic particles, the heat-resistant polymer and the heat-sensitive polymer is (50~100): (1~10): (5~50);
a melting temperature of the heat-resistant polymer is 180°C to 450°C; and
a softening temperature of the heat-sensitive polymer is 80°C to 120°C.

2. The composite electrode active layer according to claim 1, wherein the weight ratio of the inorganic particles, the heat-resistant polymer and the heat-sensitive polymer is (65~85): (3~5): (10~30).

3. The composite electrode active layer according to claim 1 or 2, wherein the heat-resistant polymer is selected from one or more of polyacrylates, polyimides or amide polymers.

4. The composite electrode active layer according to claim 3, wherein the heat-resistant polymer is selected from one or more of poly(m-phenylene isophthtalamide), poly(ethylene terephthalate) or polybismaleimide.

5. The composite electrode active layer according to any one of claims 1 to 4, wherein the heat-sensitive polymer is selected from one or more of polyol-based polymers or polyvinyl alcohols.

6. The composite electrode active layer according to claim 5, wherein the heat-sensitive polymer is polyethylene glycol and/or polyvinyl alcohol.

7. The composite electrode active layer according to any one of claims 1 to 6, wherein D50 of the inorganic particles is 0.1 µm to 6.0 µm, and (D90-D10)/D50 is 0.5 to 3.0.

8. The composite electrode active layer according to claim 7, wherein the inorganic particles are selected from one or more of boehmite, Al₂O₃, BaTiO₃, SnO₂, CeO₂, MgO, NiO, CaO, ZnO, ZrO₂, SiO₂, Y₂O₃, SiC or TiO₂.

9. The composite electrode active layer according to claim 7 or 8, wherein the inorganic particles are BaTiO₃ and TiO₂, and a weight ratio of BaTiO₃ to TiO₂ is (0.1~10): 1.

10. The composite electrode active layer according to any one of claims 1 to 9, wherein a thickness of the composite insulating layer is 4 µm to 20 µm.

11. The composite electrode active layer according to claim 10, wherein a thickness ratio of the composite insulating layer to the active material layer is (0.01~0.5): 1.

12. The composite electrode active layer according to claim 10 or 11, wherein the active material layer is an active layer of a positive electrode material and/or an active layer of a negative electrode material.

13. The composite electrode active layer according to claim 12, wherein the positive electrode material is selected from one or more of a ferric phosphate salt, a ferromanganese phosphate salt or a nickel-cobalt manganese ternary material; and/or the negative electrode material is selected from one or more of graphite, silicon, or a silicon-carbon composite material.

14. The composite electrode active layer according to any one of claims 1 to 13, wherein,
the inorganic particles are BaTiO₃ and TiO₂, and a weight ratio of BaTiO₃ to TiO₂ is (0.4~0.5): 1; and/or,
the heat-resistant polymer is poly(m-phenylene isophthtalamide) and poly(ethylene terephthalate), and a weight ratio of the poly(m-phenylene isophthtalamide) to the poly(ethylene terephthalate) is 1: (0.8~1.2); and/or,
the heat-sensitive polymer is polyethylene glycol and polyvinyl alcohol, and a weight ratio of the polyethylene glycol to the polyvinyl alcohol is 1: (1.8~2.0).

15. An electrode sheet, comprising a current collector and an electrode active layer disposed on a surface of at least one side of the current collector, wherein the electrode active layer is the composite electrode active layer according to any one of claims 1 to 14, and the active material layer in the composite electrode active layer is disposed to be in contact with the current collector; and
the electrode sheet is a negative electrode sheet and/or a positive electrode sheet.

16. The electrode sheet according to claim 15, wherein the composite insulating layer is disposed on a surface of a side of the active material layer away from the current collector by a coating process, and a coating surface density of the composite insulating layer during coating is 15 g/m² to 45 g/m².

17. The electrode sheet according to claim 15 or 16, wherein,
the electrode sheet is the positive electrode sheet, the current collector is a positive electrode current collector, the active material layer is a positive electrode material active layer, the positive electrode material active layer is disposed on the positive electrode current collector by a coating process, and a coating surface density of the positive electrode material active layer during coating is 100 g/m² to 400 g/m²; and/or,
the electrode sheet is the negative electrode sheet, the current collector is a negative electrode current collector, the active material layer is a negative electrode material active layer, the negative electrode material active layer is disposed on the negative current collector by a coating process, and a coating surface density of the negative electrode material active layer during coating is 40 g/m² to 200 g/m².

18. A secondary battery, comprising a positive electrode sheet, a negative electrode sheet and an electrolyte, wherein the positive electrode sheet is the electrode sheet according to any one of claims 15 to 17; and/or, the negative electrode sheet is the electrode sheet according to any one of claims 15 to 17.
